# EUROPÄISCHE PATENTSCHRIFT

(11) **EP 4 042 835 B1**
(45) Veröffentlichungstag und Bekanntmachung des Hinweises auf die Patenterteilung: **25.03.2026**
(21) Anmeldenummer: 20775012.6
(22) Anmeldetag: 24.09.2020
(51) Int. Cl.: H05B 6/06, H05B 6/12

(54) **INDUKTIONSENERGIEÜBERTRAGUNGSSYSTEM**
INDUCTION ENERGY TRANSMISSION SYSTEM
SYSTÈME DE TRANSMISSION D'ÉNERGIE PAR INDUCTION

(30) Priorität: 08.10.2019 EP 19382875
(43) Veröffentlichungstag der Anmeldung: 17.08.2022
(73) Patentinhaber: BSH Hausgeräte GmbH, 81739 München (DE)
(72) Erfinder: CABEZA GOZALO, Tomas, 50010 Zaragoza (ES); DOMINGUEZ VICENTE, Alberto, 50008 Zaragoza (ES); LASOBRAS BERNAD, Javier, 50016 Ejea de Los Caballeros (Zaragoza) (ES); LLORENTE GIL, Sergio, 50009 Zaragoza (ES); RIVERA PEMAN, Julio, 50410 Cuarte de Huerva (Zaragoza) (ES)
(86) Internationale Anmeldenummer: PCT/EP2020/076684
(87) Internationale Veröffentlichungsnummer: WO 2021/069221

(56) Entgegenhaltungen:
- EP-A1- 2 693 127
- EP-A1- 3 336 437
- EP-A1- 3 383 134
- WO-A1-2014/016032
- WO-A1-2017/103712
- WO-A1-2019/211718
- DE-A1- 102009 000 273

## Beschreibung

Die Erfindung betrifft ein Induktionsenergieübertragungssystem, insbesondere ein Induktionsgarsystem, nach dem Oberbegriff des Anspruchs 1 sowie ein Verfahren zu einem Betrieb eines Induktionsenergieübertragungssystems, insbesondere eines Induktionsgarsystems, nach dem Oberbegriff des Anspruchs 15.

Aus dem Stand der Technik ist bereits ein Induktionsenergieübertragungssystem bekannt, welches eine Versorgungseinheit, die als ein Kochfeld ausgebildet ist, und eine Aufnahmeeinheit aufweist, die als eine Aufstelleinheit ausgebildet ist. Bekannt sind Aufstelleinheiten, welche ein Gargeschirr und eine Unterlegeinheit aufweisen, die in einem Betriebszustand zwischen dem Gargeschirr und einer, insbesondere als Kochfeldplatte ausgebildeten, Aufstellplatte, angeordnet sind. Hierbei sind Bestandteile der Aufstelleinheit, wie beispielsweise eine Sendeeinheit, in der Unterlegeinheit integriert. Alternativ hierzu sind Aufstelleinheiten mit jeweils einer Gehäuseeinheit bekannt, welche ein Außengehäuse ausbildet und welche einen Aufnahmeraum zu einer Aufnahme von Lebensmitteln definiert. Bestandteile der Aufstelleinheit sind hierbei in der Gehäuseeinheit integriert. In einem Betriebszustand überträgt die Versorgungseinheit mittels eines Versorgungsinduktionselements induktiv Energie an die Aufnahmeeinheit. Die Aufnahmeeinheit weist eine Sendeeinheit auf, welche in dem Betriebszustand ein Signal an die Versorgungseinheit überträgt. Das Signal charakterisiert hierbei einen Identifikationsparameter, wodurch in dem Betriebszustand in Abhängigkeit von dem Signal der Sendeeinheit die Aufnahmeeinheit identifiziert und insbesondere eine Zuordnung zwischen einem Versorgungsinduktionselement der Versorgungseinheit und der Aufnahmeeinheit ermöglicht wird.

Aus der DE 10 2009 000 273 A1 ist ein Induktionsenergieübertragungssystem mit einer Aufnahmeeinheit, einer Versorgungseinheit und einer Sensoreinheit bekannt, wobei ein erster Informationskanal zur Übertragung eines Signals, welches eine von der Sensoreinheit detektierte Messgröße kodiert, zwischen der Aufnahmeeinheit und der Versorgungseinheit gebildet wird, und wobei ein zweiter Informationskanal zur Übertragung eines von dem ersten verschiedenen zweiten Signals, welches eine von der Messgröße verschiedene Information kodiert, zwischen der Aufnahmeeinheit und der Versorgungseinheit gebildet wird.

Die Aufgabe der Erfindung besteht insbesondere darin, ein gattungsgemäßes System mit verbesserten Eigenschaften hinsichtlich einer Sicherheit bereitzustellen. Die Aufgabe wird erfindungsgemäß durch die Merkmale der Ansprüche 1, 13, 14 und 15 gelöst, während vorteilhafte Ausgestaltungen und Weiterbildungen der Erfindung den Unteransprüchen entnommen werden können.

Die Erfindung geht aus von einem Induktionsenergieübertragungssystem, insbesondere einem Induktionsgarsystem und vorteilhaft einem Induktionskochfeldsystem, mit zumindest einer Versorgungseinheit, welche zumindest ein Versorgungsinduktionselement aufweist, das in wenigstens einem Betriebszustand induktiv Energie bereitstellt, mit zumindest einer Aufnahmeeinheit, welche in dem Betriebszustand wenigstens einen Teil der von dem Versorgungsinduktionselement bereitgestellten Energie empfängt, mit zumindest einer Sensoreinheit zur Detektion zumindest einer Messgröße und mit einem ersten Informationskanal zur Übertragung zumindest eines ersten Signals zwischen der Aufnahmeeinheit und der Versorgungseinheit, welches die Messgröße kodiert.

Es wird vorgeschlagen, dass das Induktionsenergieübertragungssystem zumindest einen von dem ersten Informationskanal verschiedenen zweiten Informationskanal zur Übertragung zumindest eines zweiten Signals zwischen der Aufnahmeeinheit und der Versorgungseinheit, welches die Messgröße kodiert, aufweist. Durch die erfindungsgemäße Ausgestaltung kann ein hoher Grad von Sicherheit, insbesondere für einen Bediener, erreicht werden. Insbesondere kann eine über den ersten Informationskanal mittels eines ersten Signals übertragene Information durch ein zweites Signal über den zweiten Informationskanal erneut und/oder parallel übertragen und dadurch verifiziert werden. Hierdurch kann insbesondere eine korrekte Übertragung einer mittels der Sensoreinheit detektierten Messgröße sichergestellt werden, wodurch insbesondere Fehlfunktionen und damit möglicherweise verbundene Gefahren für einen Bediener reduziert werden können. Zudem kann eine hohe Funktionalität und damit ein hoher Bedienkomfort und/oder eine einfache und/oder komfortable Bedienbarkeit ermöglicht und eine Nutzerzufriedenheit kann erhöht werden.

Unter einem "Induktionsenergieübertragungssystem", insbesondere unter einem "Induktionsgarsystem" und vorteilhaft unter einem "Induktionskochfeldsystem", soll insbesondere ein System verstanden werden, welches zumindest eine Versorgungseinheit, insbesondere zumindest ein Induktionsgargerät und vorteilhaft zumindest ein Induktionskochfeld, aufweist und welches eine Hauptfunktionalität in Form einer Energieübertragung aufweist. Beispielsweise könnte das Induktionsenergieübertragungssystem als ein Induktionshandwerkzeugmaschinensystem ausgebildet sein. Insbesondere könnte die Versorgungseinheit und/oder die Aufnahmeeinheit als eine Handwerkzeugmaschine, wie beispielsweise ein Bohrer und/oder ein Elektroschrauber und/oder ein Bohrhammer und/oder eine Säge, ausgebildet sein. Alternativ oder zusätzlich könnte die Versorgungseinheit und/oder die Aufnahmeeinheit als ein Transformator ausgebildet sein. Das Induktionsenergieübertragungssystem könnte insbesondere für zumindest ein selbstfahrendes Arbeitsgerät und/oder für zumindest eine Fernsteuerung und/oder für zumindest eine Fernbedienung vorgesehen sein. Insbesondere könnte die Aufnahmeeinheit als ein selbstfahrendes Arbeitsgerät und/oder als eine Fernsteuerung und/oder als eine Fernbedienung ausgebildet sein. Das selbstfahrende Arbeitsgerät könnte beispielsweise als ein selbstfahrender Rasenmäher und/oder als ein selbstfahrender Staubsauger ausgebildet sein. Die Fernsteuerung und/oder die Fernbedienung könnte insbesondere zu einer Bedienung und/oder zu einer Steuerung zumindest einer Jalousie und/oder zumindest eines Elektrogeräts, insbesondere zumindest eines Haushaltselektrogeräts, und/oder zumindest eines Modellobjekts, wie beispielsweise eines Modellautos und/oder eines Modellflugzeugs und/oder eines Modellboots, vorgesehen sein. Ferner könnte die Aufnahmeeinheit des Induktionsenergieübertragungssystems als ein Fortbewegungsmittel insbesondere als ein Elektrokraftfahrzeug oder als ein Hybridkraftfahrzeug oder als ein Elektrofahrrad oder als ein Elektroroller oder als ein anderes voll- oder teilelektrisch betriebenes Fortbewegungsmittel ausgebildet sein. Vorzugsweise ist das Induktionsenergieübertragungssystem als ein Induktionsgarsystem ausgebildet. Beispielsweise könnte das Induktionsenergieübertragungssystem als ein Induktionsbackofensystem und/oder als ein Induktionsgrillsystem ausgebildet sein. Insbesondere könnte die Versorgungseinheit und/oder die Aufnahmeeinheit als ein Induktionsbackofen und/oder als ein Induktionsgrill ausgebildet sein. Vorteilhaft ist das Induktionsenergieübertragungssystem als ein Induktionskochfeldsystem ausgebildet. Die Versorgungseinheit und/oder die Aufnahmeeinheit ist dann insbesondere als ein Induktionskochfeld ausgebildet.

Unter einer "Versorgungseinheit" soll insbesondere eine Einheit verstanden werden, welche in wenigstens einem Betriebszustand induktiv Energie bereitstellt und welche insbesondere eine Hauptfunktionalität in Form einer Energiebereitstellung aufweist. Zu der Bereitstellung von Energie weist die Versorgungseinheit insbesondere zumindest ein Versorgungsinduktionselement auf, welches insbesondere zumindest eine Spule, insbesondere zumindest eine Primärspule, aufweist und welches insbesondere in dem Betriebszustand induktiv Energie bereitstellt.

Unter einem "Induktionselement" soll insbesondere ein Element verstanden werden, welches in wenigstens einem Betriebszustand Energie, insbesondere zum Zweck einer induktiven Energieübertragung, bereitstellt und/oder aufnimmt. Insbesondere stellt in dem Betriebszustand ein als Versorgungsinduktionselement ausgebildetes Induktionselement Energie insbesondere zum Zweck einer induktiven Energieübertragung bereit. Das Versorgungsinduktionselement könnte insbesondere zumindest eine Spule, insbesondere zumindest eine Primärspule, aufweisen, welche insbesondere zu einer induktiven Energieübertragung an zumindest eine Sekundärspule vorgesehen sein kann. Die Sekundärspule könnte beispielsweise Teil der Aufnahmeeinheit sein, insbesondere zumindest eines Aufnahmeinduktionselements der Aufnahmeeinheit. Insbesondere nimmt in dem Betriebszustand ein als Aufnahmeinduktionselement ausgebildetes Induktionselement Energie insbesondere zum Zweck einer induktiven Energieübertragung auf, und zwar insbesondere von dem Versorgungsinduktionselement. Das Aufnahmeinduktionselement könnte insbesondere zumindest eine Spule, insbesondere zumindest eine Sekundärspule, aufweisen, welche insbesondere zu einer induktiven Energieaufnahme von dem Versorgungsinduktionselement vorgesehen sein könnte.

Das Versorgungsinduktionselement könnte beispielsweise als ein Transformatorelement ausgebildet sein. Alternativ oder zusätzlich könnte das Versorgungsinduktionselement insbesondere als ein Induktionsheizelement ausgebildet sein und insbesondere zu einer Energieübertragung an zumindest eine als Aufstelleinheit ausgebildete Aufnahmeeinheit insbesondere zum Zweck einer Erhitzung der Aufstelleinheit vorgesehen sein. Das Versorgungsinduktionselement könnte in wenigstens einem Betriebszustand insbesondere ein Wechselfeld, insbesondere ein elektromagnetisches Wechselfeld, mit einer Frequenz von mindestens 1 Hz, insbesondere von mindestens 2 Hz, vorteilhaft von mindestens 5 Hz und vorzugsweise von mindestens 10 Hz bereitstellen. Insbesondere könnte das Versorgungsinduktionselement in wenigstens einem Betriebszustand insbesondere ein Wechselfeld, insbesondere ein elektromagnetisches Wechselfeld, mit einer Frequenz von maximal 150 kHz, insbesondere von maximal 120 kHz, vorteilhaft von maximal 100 kHz und vorzugsweise von maximal 80 kHz bereitstellen. Ein insbesondere als Induktionsheizelement ausgebildetes Versorgungsinduktionselement könnte in wenigstens einem Betriebszustand insbesondere ein hochfrequentes Wechselfeld, insbesondere ein hochfrequentes elektromagnetisches Wechselfeld, mit einer Frequenz von mindestens 15 kHz und insbesondere von maximal 100 kHz bereitstellen.

Beispielsweise könnte die Versorgungseinheit genau ein Versorgungsinduktionselement aufweisen. Die Versorgungseinheit könnte jedoch auch zumindest zwei, insbesondere zumindest drei, vorteilhaft zumindest vier, besonders vorteilhaft zumindest fünf, vorzugsweise zumindest acht und besonders bevorzugt mehrere Versorgungsinduktionselemente aufweisen, welche insbesondere in dem Betriebszustand jeweils induktiv Energie bereitstellen könnten, und zwar insbesondere an eine insbesondere einzige Aufnahmeeinheit oder an zumindest zwei oder mehrere Aufnahmeeinheiten. Insbesondere könnte ein insbesondere beliebiges der Versorgungsinduktionselemente in einem Nahbereich von zumindest einem weiteren der Versorgungsinduktionselemente angeordnet sein. Zumindest ein Teil der Versorgungsinduktionselemente könnte beispielsweise in einer Reihe und/oder in Form einer Matrix angeordnet sein.

Unter einer "Aufnahmeeinheit" soll insbesondere eine Einheit verstanden werden, welche in wenigstens einem Betriebszustand, insbesondere induktiv, Energie empfängt und welche insbesondere zumindest eine Hauptfunktion aufweist. Die Aufnahmeeinheit könnte beispielsweise zumindest einen Verbraucher aufweisen, welcher in dem Betriebszustand insbesondere Energie verbrauchen könnte. Die Aufnahmeeinheit könnte beispielsweise eine Handwerkzeugmaschine, wie beispielsweise ein Bohrer und/oder ein Elektroschrauber und/oder ein Bohrhammer und/oder eine Säge, und/oder ein Auto und/oder ein mobiles Gerät, wie beispielsweise ein Laptop und/oder ein Tablet und/oder ein Mobiltelefon, und/oder eine Fernsteuerung und/oder eine Fernbedienung und/oder ein selbstfahrendes Arbeitsgerät sein. Ferner könnte die Aufnahmeeinheit als ein Fortbewegungsmittel insbesondere als ein Elektrokraftfahrzeug oder als ein Hybridkraftfahrzeug oder als ein Elektrofahrrad oder als ein Elektroroller oder als ein anderes voll- oder teilelektrisch betriebenes Fortbewegungsmittel ausgebildet sein. Eine Hauptfunktion der Aufnahmeeinheit könnte beispielsweise Bohren und/oder Hämmern und/oder Sägen und/oder Schrauben und/oder Datenverarbeitung und/oder Telefonieren und oder/oder Fahren beinhalten. Im Falle eines als Induktionsgarsystem ausgebildeten Induktionsenergieübertragungssystems ist eine Hauptfunktion der Aufnahmeeinheit insbesondere eine Energieaufnahme. Beispielsweise könnte die von der Aufnahmeeinheit aufgenommene Energie in dem Betriebszustand insbesondere direkt in zumindest eine weitere Energieform umgewandelt werden, wie beispielsweise in Wärme. Insbesondere könnte die Aufnahmeeinheit frei von Aufnahmeinduktionselementen sein. Vorzugsweise weist die Aufnahmeeinheit zumindest ein Aufnahmeinduktionselement zu einer Aufnahme von induktiver Energie auf. Das Aufnahmeinduktionselement könnte beispielsweise zumindest eine Spule, insbesondere zumindest eine Sekundärspule, aufweisen.

Unter einer "Sensoreinheit" soll insbesondere eine Einheit verstanden werden, welche in wenigstens einem Betriebszustand zumindest eine Messgröße detektiert und weiterverarbeitet. Die Sensoreinheit weist zumindest ein Sensorelement auf. Die Sensoreinheit könnte insbesondere auch mehrere Sensorelemente aufweisen. Unter einem "Sensorelement" soll in diesem Zusammenhang insbesondere ein der Sensoreinheit zugeordnetes Element verstanden werden, welches insbesondere als ein Sensor ausgebildet sein kann und in zumindest einem Betriebszustand zumindest eine Messgröße und/oder zumindest eine physikalische und/oder chemische Eigenschaft in seiner Umgebung quantitativ und/oder qualitativ detektiert und zu einer weiteren Verarbeitung in ein elektrisches Signal umwandelt, wobei die Detektion aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Ein Sensorelement könnte beispielsweise als ein Temperatursensor oder als ein Gewichtssensor oder als ein Volumensensor oder als ein Feuchtigkeitssensor ausgebildet sein. Es sind verschiedene weitere, dem Fachmann als sinnvoll erscheinende Sensorelemente denkbar.

Unter einer "Messgröße" soll insbesondere eine messbare physikalische Größe verstanden werden. Eine Messgröße könnte beispielsweise eine Temperatur und/oder eine Masse und/oder ein Volumen und/oder eine Stoffmenge und/oder eine Leistung und/oder eine Zeit und/oder ein Druck und/oder eine relative und/oder absolute Feuchtigkeit und/oder eine Stoffzusammensetzung sein. Alternativ oder zusätzlich könnte eine Messgröße eine qualitative Größe sein, welche einen Zustand, beispielsweise einen Betriebszustand oder einen Garzustand oder einen Ladezustand beschreibt. Grundsätzlich sind sämtliche, einem Fachmann als sinnvoll erscheinenden Messgrößen denkbar.

Unter "kodiert" soll insbesondere in ein spezielles und insbesondere zu einer effizienten Übertragung und/oder Speicherung geeignetes Format konvertiert und/oder übersetzt verstanden werden. Insbesondere kann eine Kodierung einen Prozess einer Konvertierung von analog zu digital und/oder von digital zu analog beinhalten. Es ist denkbar, dass eine Kodierung auch einen Schritt einer Verschlüsselung umfasst, um beispielsweise einen unberechtigten Zugang zu einer in einem Signal kodierten Information zu blockieren.

Unter einem "Informationskanal" soll insbesondere die Gesamtheit aller Einheiten, Elemente und Übertragungswege verstanden werden, welche an einer Übertragung zumindest eines Signals von zumindest einem Sender zu zumindest einem Empfänger beteiligt sind. Insbesondere umfasst ein Informationskanal zumindest einen Teil der Versorgungseinheit und zumindest einen Teil der Aufnahmeeinheit. Unter einem "Übertragungsweg" soll insbesondere ein Weg verstanden werden über den ein zu übertragendes Signal von zumindest einem Sender zu zumindest einem Empfänger übertragen werden kann. Ein Übertragungsweg kann dabei kabelgebunden sein, wobei ein Übertragungsmedium in diesem Fall ein elektrisch leitfähiges metallenes Kabel und/oder eine Leitung oder ein beispielsweise aus Glas-, Quarz- oder Kunststofffasern bestehender Lichtwellenleiter sein kann. Vorzugsweise ist ein Übertragungsweg innerhalb eines Informationskanals drahtlos und umfasst zumindest eine elektromagnetische Welle, wobei ein Übertragungsmedium des Informationskanals in diesem Fall beispielsweise Luft sein könnte.

Die Versorgungseinheit könnte beispielsweise als ein Energieladegerät, insbesondere als ein Induktionsenergieladegerät, ausgebildet und insbesondere dazu vorgesehen sein, mittels des Versorgungsinduktionselements Energie an zumindest eine Aufnahmeeinheit zu übertragen, welche insbesondere als ein mobiles Gerät, wie beispielsweise ein Laptop und/oder ein Tablet und/oder ein Mobiltelefon, und/oder als eine Handwerkzeugmaschine und/oder als ein selbstfahrendes Arbeitsgerät und/oder als eine Fernsteuerung und/oder als eine Fernbedienung ausgebildet sein könnte. Ferner könnte die Aufnahmeeinheit als ein Fortbewegungsmittel, wie beispielsweise als ein Elektrokraftfahrzeug und/oder ein Hybridkraftfahrzeug und/oder als ein Elektrofahrrad und/oder als ein Elektroroller und/oder als ein anderes voll- oder teilelektrisch angetriebenes Fortbewegungsmittel ausgebildet sein, wobei die Versorgungseinheit in diesen Fällen als eine Ladestation oder Ladesäule oder dergleichen ausgebildet und beispielsweise an oder in einer Parkmöglichkeit integriert sein könnte. Vorzugsweise ist die Versorgungseinheit als ein Gargerät, insbesondere als ein Induktionsgargerät, wie beispielsweise als ein Kochfeld, insbesondere als ein Induktionskochfeld und/oder als ein Backofen, insbesondere als ein Induktionsbackofen, und/oder als ein Grill, insbesondere als ein Induktionsgrill, ausgebildet. Insbesondere beheizt die Versorgungseinheit mittels der von dem Versorgungsinduktionselement bereitgestellten Energie zumindest einen Teil der Aufnahmeeinheit, insbesondere zumindest einen Aufnahmeraum der Aufnahmeeinheit. Dadurch kann die Aufnahmeeinheit insbesondere mit der für die Aufnahmeeinheit vorgesehenen Energie versorgt werden, wodurch insbesondere optimale Garergebnisse und/oder eine zuverlässige Funktionstüchtigkeit von in der Aufnahmeeinheit integrierten elektrischen und/oder elektronischen Einheiten erreicht werden/wird.

Unter einem "Aufnahmeraum" soll insbesondere ein räumlicher Bereich verstanden werden, welcher in dem Betriebszustand, in welchem die Versorgungseinheit insbesondere Energie an die Aufnahmeeinheit überträgt, wenigstens zu einem Großteil von der Aufnahmeeinheit begrenzt ist und in welchem in dem Betriebszustand insbesondere Lebensmittel angeordnet sein können. Die Lebensmittel könnten insbesondere in fluider, insbesondere flüssiger und/oder wenigstens zu einem Großteil flüssiger, und/oder fester Form in dem Aufnahmeraum angeordnet sein. Dadurch können Lebensmittel insbesondere besonders effizient und/oder gezielt gegart werden, da insbesondere eine zu einer Garung erforderliche Energie präzise übertragen werden kann.

In einer vorteilhaften Ausgestaltung der vorliegenden Erfindung wird vorgeschlagen, dass die Aufnahmeeinheit als ein Gargeschirr, insbesondere als ein Induktionsgargeschirr, ausgebildet ist. Die als Gargeschirr ausgebildete Aufnahmeeinheit weist vorteilhaft zumindest ein Aufnahmeinduktionselement auf, welches als eine Sekundärspule ausgebildet ist. Das Aufnahmeinduktionselement versorgt zumindest ein elektrisches Heizelement, vorzugsweise ein elektrisches Widerstandsheizelement, mit einem Teil der von dem Versorgungsinduktionselement empfangenen Energie. Hierdurch kann vorteilhaft zumindest ein während eines Garprozesses in dem Aufnahmeraum des Gargeschirrs angeordnetes Gargut präzise mit der für einen jeweiligen Garprozess vorgesehenen Energie versorgt werden, wodurch insbesondere optimale Garergebnisse erzielt werden können. Alternativ oder zusätzlich könnte die als Gargeschirr ausgebildete Aufnahmeeinheit zumindest eine insbesondere ferromagnetische Bodenplatte aufweisen, welche unterhalb des Aufnahmeraums angeordnet ist und in der durch die von dem Versorgungsinduktionselement induktiv bereitgestellte Energie Wirbelströme induziert werden, welche die Bodenplatte zu einer Erwärmung eines in dem Aufnahmeraum befindlichen Garguts erhitzen.

In einer vorteilhaften alternativen Ausgestaltung der vorliegenden Erfindung wird vorgeschlagen, dass die Aufnahmeeinheit als eine Unterlegeinheit zur Aufstellung eines Gargeschirrs ausgebildet ist. Beispielsweise könnte eine als Unterlegeinheit ausgebildete Aufnahmeeinheit aus zumindest einem magnetischen, insbesondere aus zumindest einem ferromagnetischen, Material bestehen und hierdurch kann sie vorteilhaft insbesondere eine Beheizung eines induktionsuntauglichen und/oder nicht-magnetischen, insbesondere eines nicht-ferromagnetischen Gargeschirrs mittels der von dem Versorgungsinduktionselement bereitgestellten Energie ermöglichen. Ferner kann dadurch vorteilhaft eine Übertragung von Wärme von dem Gargeschirr auf eine Aufstellplatte wenigstens im Wesentlichen verhindert werden.

Es wäre beispielsweise denkbar, dass der erste Informationskanal eine kabelgebundene Sendeeinheit und eine kabelgebundene Empfangseinheit zu einer elektrischen und/oder optischen Übertragung eines ersten Signals aufweist. Alternativ oder zusätzlich ist denkbar, dass der erste Informationskanal zumindest zwei Funksender und zumindest zwei Funkempfänger beinhalten und zu einer bidirektionalen Signalübertragung geeignet sein könnte. Vorteilhaft weist der erste Informationskanal jedoch zumindest einen Funksender und zumindest einen Funkempfänger auf. Hierdurch kann vorteilhaft eine insbesondere kostengünstige drahtlose Übertragung eines ersten Signals zwischen der Versorgungseinheit und der Aufnahmeeinheit erfolgen. Ferner kann hierdurch insbesondere vorteilhaft ein Bedienkomfort erhöht werden.

Ferner wird vorgeschlagen, dass eine Übertragung des ersten Signals zwischen dem Funksender und dem Funkempfänger nach dem Bluetooth-Standard erfolgt. Hierdurch kann vorteilhaft eine insbesondere zuverlässige Übertragung des ersten Signals zwischen der Versorgungseinheit und der Aufnahmeeinheit erfolgen. Alternativ oder zusätzlich wäre denkbar, dass eine Übertragung des ersten Signals zwischen dem Funksender und dem Funkempfänger nach einem anderen Funkstandard, beispielsweise nach dem Wireless-Lan-Standard oder dem Z-Wave-Standard oder dem Zig-Bee-Standard oder einem anderen einem Fachmann für eine Übertragung des ersten Signals als sinnvoll erscheinenden Funkstandard erfolgt.

Ferner wird vorgeschlagen, dass der zweite Informationskanal das Versorgungsinduktionselement und zumindest ein als Empfangsinduktionselement ausgebildetes Aufnahmeinduktionselement der Aufnahmeeinheit umfasst. Hierdurch kann vorteilhaft ein zweites Signal, welches die Messgröße kodiert, zwischen der Versorgungseinheit und der Aufnahmeeinheit übertragen werden. Insbesondere kann dadurch ein zweites Signal zwischen der Versorgungseinheit und der Aufnahmeeinheit mittels eines Energieübertragungssignals übertragen werden. Dadurch kann vorteilhaft eine kompakte und/oder bauteilarme Ausgestaltung erzielt werden. Unter einem "Empfangsinduktionselement" soll insbesondere ein Induktionselement verstanden werden, welches in wenigstens einem Betriebszustand ein elektromagnetisches Signal insbesondere zum Zweck einer induktiven Signalübertragung aufnimmt. Das Empfangsinduktionselement könnte insbesondere zumindest eine Spule, insbesondere zumindest eine Sekundärspule, aufweisen, welche insbesondere zu einem induktiven Empfang eines von dem Versorgungsinduktionselement bereitgestellten elektromagnetischen Signals vorgesehen sein könnte. Bei dem Empfangsinduktionselement kann es sich um ein Aufnahmeinduktionselement handeln, welches als eine Hauptfunktion einen Empfang der von dem Versorgungsinduktionselement bereitgestellten Energie realisiert und zusätzlich die Funktion eines Empfangs eines weiteren, von einem Energieübertragungssignal verschiedenen Signals, insbesondere eines zweiten und/oder eines dritten Signals, erfüllt. Alternativ kann ein Empfangsinduktionselement von einem Aufnahmeinduktionselement verschieden ausgebildet sein und ausschließlich eine Funktion eines weiteren, von einem Energieübertragungssignal verschiedenen Signals, insbesondere eines zweiten und/oder eines dritten Signals, erfüllen. Die Aufnahmeeinheit kann mehrere Empfangsinduktionselemente aufweisen.

Beispielsweise könnte das Signal auf ein Energieübertragungssignal der Versorgungseinheit aufmoduliert und/oder identisch mit dem Energieübertragungssignal der Versorgungseinheit sein. Insbesondere könnten ein Energieübertragungssignal der Versorgungseinheit und das zweite Signal die gleiche Frequenz aufweisen und/oder Vielfache der gleichen Frequenz sein. Dadurch kann insbesondere eine kompakte und/oder bauteilearme Ausgestaltung erzielt werden, wodurch insbesondere geringe Kosten erreicht werden können.

Weiterhin wird vorgeschlagen, dass das zweite Signal frequenzmoduliert und/oder amplitudenmoduliert und/oder tastgradmoduliert ist. Insbesondere ist zumindest eine Information, welche in dem zweiten Signal und/oder einem dritten Signal kodiert und/oder mittels des zweiten Signals und/oder des dritten Signals übertragbar ist, durch zumindest eine Frequenz und/oder zumindest eine Amplitude und/oder zumindest einen Tastgrad insbesondere einem Energieübertragungssignal der Versorgungseinheit aufmoduliert. Das zweite Signal und/oder das dritte Signal könnten/könnte insbesondere einer Oberschwingung eines Energieübertragungssignals der Versorgungseinheit entsprechen. Dadurch kann insbesondere eine einfache und/oder zuverlässige Übertragung des zweiten Signals und/oder des dritten Signals sichergestellt werden. Alternativ oder zusätzlich wäre denkbar, dass das zweite Signal und/oder das dritte Signal dem Energieübertragungssignal der Versorgungseinheit entsprechen/entspricht. Unter einer "Frequenzmodulation" soll insbesondere ein Modulationsverfahren verstanden werden, bei dem eine Trägerfrequenz, beispielsweise eine Frequenz eines Energieübertragungssignals, oder eine Netzfrequenz, verändert wird, um ein weiteres Signal zu übertragen. Unter einer "Amplitudenmodulation" soll insbesondere ein Modulationsverfahren verstanden werden bei dem eine Amplitude eines Trägersignals, beispielsweise eine Amplitude eines Energieübertragungssignals, verändert wird, um ein weiteres Signal zu übertragen. Unter einer "Tastgradmodulation" soll insbesondere ein Modulationsverfahren verstanden werden, bei dem ein Tastgrad, also ein Verhältnis einer Impulsdauer eines Trägersignals zu einer Periodendauer eines Trägersignals, beispielsweise eines Energieübertragungssignals, verändert wird, um ein weiteres Signal zu übertragen.

Zudem wird vorgeschlagen, dass die Sensoreinheit zumindest ein Sensorelement aufweist welches in der Versorgungseinheit integriert ist. Hierdurch kann beispielsweise vorteilhaft ein hoher Komfort für einen Nutzer bereitgestellt werden. Alternativ oder zusätzlich wäre denkbar, dass die Sensoreinheit ein externes Sensorelement aufweisen kann, welches beispielsweise über ein Kabel oder drahtlos beispielsweise mit der Versorgungseinheit verbunden werden kann.

Außerdem wird vorgeschlagen, dass die Sensoreinheit zumindest ein Sensorelement, insbesondere ein weiteres Sensorelement, aufweist, welches in der Aufnahmeeinheit integriert ist. Durch eine solche Ausgestaltung kann vorteilhaft zumindest eine Messgröße in einer Umgebung und insbesondere innerhalb des Aufnahmeraums der Aufnahmeeinheit ermittelt werden. Hierdurch kann weiterhin vorteilhaft insbesondere eine kompakte und/oder bauteilearme Ausgestaltung erzielt und eine Anzahl von Bauteilen kann reduziert werden. Alternativ oder zusätzlich wäre denkbar, dass die Sensoreinheit ein externes Sensorelement aufweist, welches beispielsweise an der Aufnahmeeinheit angebracht und/oder angeschlossen und/oder aufgelegt und/oder auf eine andere sinnvolle Art und Weise mit der Aufnahmeeinheit verbunden werden kann.

Ferner wird vorgeschlagen, dass die Sensoreinheit zumindest einen Temperatursensor aufweist. Vorteilhaft ist zumindest ein Sensorelement der Sensoreinheit als ein Temperatursensor ausgebildet. Hierdurch kann vorteilhaft eine Temperatur, beispielsweise eine Temperatur eines Garguts, durch die Sensoreinheit als Messgröße ermittelt und beispielsweise für eine Ausgabe an einen Nutzer und/oder für eine, insbesondere automatische, Anpassung einer durch die Versorgungseinheit bereitgestellten Energie weiterverarbeitet werden. Alternativ oder zusätzlich ist denkbar, dass zumindest ein Sensorelement der Sensoreinheit als ein von einem Temperatursensor verschiedener Sensor ausgebildet ist. Denkbar wäre beispielsweise, dass zumindest ein Sensorelement der Sensoreinheit beispielsweise als ein Gewichtssensor oder als ein Volumensensor oder als ein Drucksensor oder als ein Feuchtigkeitssensor oder als ein Bewegungssensor oder als ein weiterer, einem Fachmann für eine Anwendung eines Induktionsenergieübertragungssystems als sinnvoll erscheinender Sensor ausgebildet ist. Ferner ist denkbar, dass zumindest ein weiteres Sensorelement der Sensoreinheit als ein weiterer Temperatursensor ausgebildet ist.

Gemäß einer weiteren vorteilhaften Ausgestaltung der vorliegenden Erfindung wird vorgeschlagen, dass das Induktionsenergieübertragungssystem zumindest einen dritten Informationskanal zur Übertragung zumindest eines dritten Signals zwischen der Aufnahmeeinheit und der Versorgungseinheit, welches eine weitere Messgröße kodiert, aufweist. Der dritte Informationskanal kann insbesondere gemeinsame Einheiten, insbesondere ein gemeinsames Versorgungsinduktionselement und ein gemeinsames Empfangsinduktionselement, mit dem zweiten Informationskanal aufweisen. Der dritte Informationskanal unterscheidet sich von dem zweiten Informationskanal insbesondere durch das von dem zweiten Signal verschiedene dritte Signal. Bei einer Trägerfrequenz des dritten Signals könnte es sich insbesondere um eine weitere, von einer Trägerfrequenz des zweiten Signals verschiedene Frequenz eines durch das Versorgungsinduktionselement bereitgestellten elektromagnetischen Wechselfeldes, beispielsweise um eine Netzfrequenz, handeln. Das dritte Signal könnte beispielsweise, insbesondere durch eine Frequenzmodulation und/oder eine Amplitudenmodulation und/oder eine Tastgradmodulation, auf die weitere Trägerfrequenz aufmoduliert sein. Alternativ oder zusätzlich wäre beispielsweise denkbar, dass das zweite Signal durch eine erste Modulation, beispielsweise durch Frequenzmodulation einer Trägerfrequenz, und das dritte Signal über eine zweite zusätzliche Modulation, beispielsweise über eine Amplitudenmodulation derselben Trägerfrequenz, übertragen wird. Hierdurch kann insbesondere vorteilhaft eine weitere Messgröße zwischen der Aufnahmeeinheit und der Versorgungseinheit übertragen werden. Hierdurch kann insbesondere eine fehlerfreie Übertragung einer weiteren Messgröße zwischen der Versorgungseinheit und der Aufnahmeeinheit sichergestellt werden. Ferner kann insbesondere vorteilhaft ein hoher Komfort für einen Nutzer bereitgestellt werden.

Die Erfindung geht ferner aus von einem Verfahren zum Betrieb eines Induktionsenergieübertragungssystems, insbesondere eines Induktionsgarsystems, mit zumindest einer Versorgungseinheit, welche zumindest ein Versorgungsinduktionselement aufweist, und mit zumindest einer Aufnahmeeinheit, wobei in wenigstens einem Betriebszustand durch das Versorgungsinduktionselement induktiv Energie bereitgestellt wird, welche zumindest zu einem Teil von der Aufnahmeeinheit empfangen wird, und zumindest eine Messgröße detektiert wird, welche in einem ersten Signal kodiert und durch einen ersten Informationskanal zwischen der Versorgungseinheit und der Aufnahmeeinheit übertragen wird.

Es wird vorgeschlagen, dass die zumindest eine Messgröße in einem zweiten Signal kodiert und durch zumindest einen von dem ersten Informationskanal verschiedenen zweiten Informationskanal zwischen der Versorgungseinheit und der Aufnahmeeinheit übertragen wird. Hierdurch kann eine Betriebssicherheit gesteigert werden.

Das Induktionsenergieübertragungssystem soll hierbei nicht auf die oben beschriebene Anwendung und Ausführungsform beschränkt sein. Insbesondere kann das Induktionsenergieübertragungssystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Induktionsenergieübertragungssystem mit einer Versorgungseinheit und einer Aufnahmeeinheit in einer schematischen Draufsicht,
- Fig. 2: das Induktionsenergieübertragungssystem mit einem ersten Informationskanal zur Übertragung eines ersten Signals und mit einem zweiten Informationskanal zur Übertragung eines zweiten Signals, in einer schematischen Schnittdarstellung,
- Fig. 3: das Induktionsenergieübertragungssystem mit einer als Gargerät ausgebildeten Versorgungseinheit,
- Fig. 4: eine Zusammenschau von vier Diagrammen, in welchen das zweite Signal, eine Amplitude des zweiten Signals, eine Frequenz des zweiten Signals und eine Messgröße jeweils über einer Zeit aufgetragen sind, in einer schematischen Darstellung,
- Fig. 5: ein Diagramm eines Verfahrens zu einem Betrieb des Induktionsenergieübertragungssystems in einer schematischen Darstellung,
- Fig. 6: ein Diagramm eines weiteren Verfahrens zu einem Betrieb des Induktionsenergieübertragungssystems in einer schematischen Darstellung und
- Fig. 7: eine Aufnahmeeinheit eines alternativen Ausführungsbeispiels eines Induktionsenergieübertragungssystems in einer schematischen Darstellung.

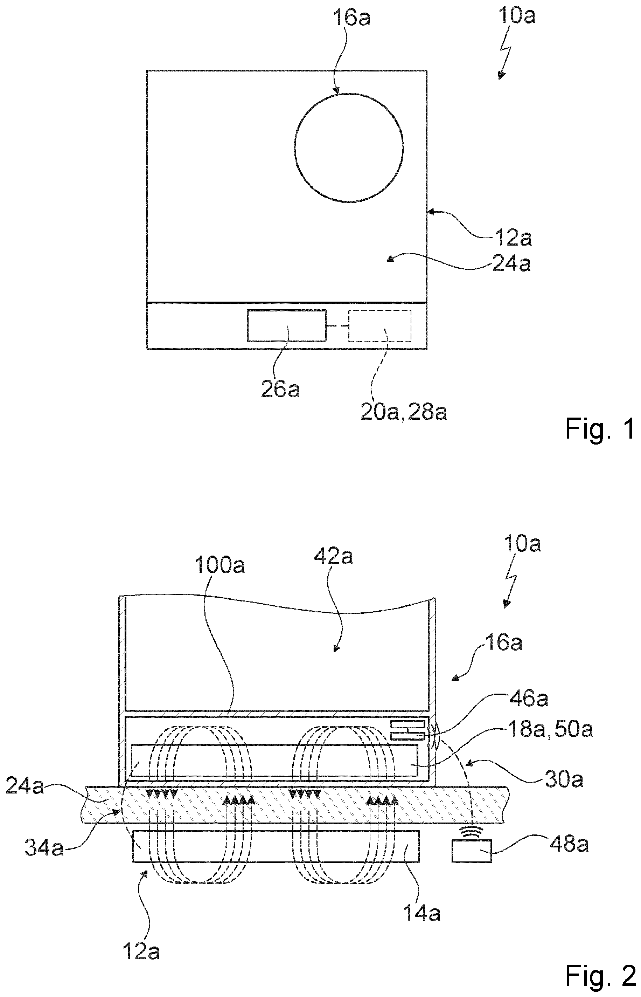

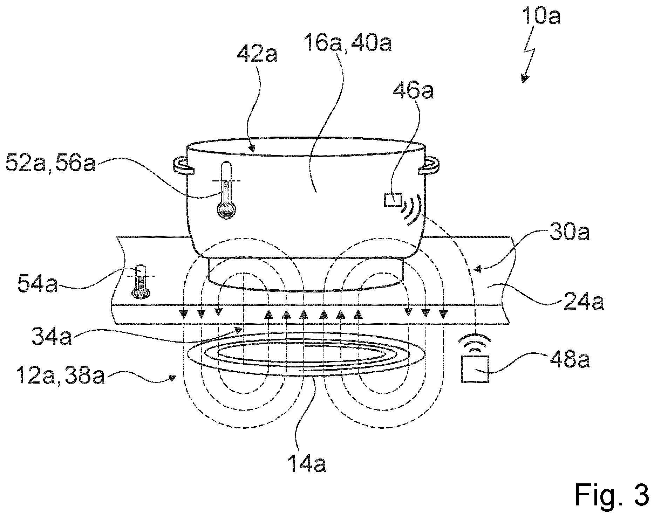

Fig. 1 zeigt eine Draufsicht auf ein Induktionsenergieübertragungssystem 10a, welches als ein Induktionsgarsystem ausgebildet ist. Die Figuren 2 und 3 zeigen seitliche Ansichten des Induktionsenergieübertragungssystems 10a teilweise in Schnittdarstellung.

Im vorliegenden Ausführungsbeispiel ist das Induktionsenergieübertragungssystem 10a als ein Induktionskochfeldsystem ausgebildet. Das Induktionsenergieübertragungssystem 10a weist eine Versorgungseinheit 12a auf, welche als eine Induktionsversorgungseinheit, ausgebildet ist. Die Versorgungseinheit 12a ist als ein Gargerät 38a, insbesondere als ein Kochfeld und zwar als ein Induktionskochfeld, ausgebildet. Im vorliegenden Ausführungsbeispiel weist die Versorgungseinheit 12a eine Aufstellplatte 24a auf.

In einem montierten Zustand bildet die Aufstellplatte 24a eine Sichtfläche aus, welche in einem montierten Zustand insbesondere einem Bediener zugewandt angeordnet ist. Die Aufstellplatte 24a ist zu einem Aufstellen einer Aufnahmeeinheit 16a des Induktionsenergieübertragungssystem 10a, und zwar eines Gargeschirrs 40a, zu einer Beheizung vorgesehen. Im vorliegenden Ausführungsbeispiel ist die Aufstellplatte 24a als eine Kochfeldplatte ausgebildet. Die als Gargeschirr 40a ausgebildete Aufnahmeeinheit 16a weist zumindest einen Aufnahmeraum 42a und zumindest eine Bodenplatte 100a auf. In wenigstens einem Betriebszustand befinden sich in dem Aufnahmeraum 42a Lebensmittel, welche durch die von einem Versorgungsinduktionselement 14a bereitgestellte und von der Aufnahmeeinheit 16a empfangene Energie besonders effizient und/oder gezielt gegart werden.

Die Versorgungseinheit 12a weist eine Bedienerschnittstelle 26a zu einer Eingabe und/oder Auswahl von Betriebsparametern auf, beispielsweise einer Heizleistung und/oder einer Heizleistungsdichte und/oder einer Heizzone. Die Bedienerschnittstelle 26a ist zu einer Ausgabe eines Werts eines Betriebsparameters an einen Bediener vorgesehen.

Die Versorgungseinheit 12a weist eine Steuereinheit 28a auf. Die Steuereinheit 28a ist dazu vorgesehen, in Abhängigkeit von mittels der Bedienerschnittstelle 26a eingegebenen Betriebsparametern Aktionen auszuführen und/oder Einstellungen zu verändern. Die Steuereinheit 28a regelt in einem Betriebszustand eine Energiezufuhr zu zumindest einem Versorgungsinduktionselement 14a der Versorgungseinheit 12a.

Vorzugsweise weist die Versorgungseinheit 12a mehrere Versorgungsinduktionselemente 14a auf. Die Versorgungsinduktionselemente 14a sind im vorliegenden Ausführungsbeispiel in Form einer Matrix angeordnet (nicht dargestellt). Alternativ könnte die Versorgungseinheit 12a eine andere Anzahl an Versorgungsinduktionselementen 14a aufweisen. Die Versorgungsinduktionselemente 14a könnten beispielsweise auf eine von einer Anordnung in Form einer Matrix verschiedene Weise angeordnet sein. Von den Versorgungsinduktionselementen 14a ist in den Figuren lediglich eines dargestellt. Im Folgenden wird lediglich eines der Versorgungsinduktionselemente 14a beschrieben.

Das Versorgungsinduktionselement 14a ist dazu vorgesehen, die auf der Aufstellplatte 24a oberhalb des Versorgungsinduktionselements 14a aufgestellte Aufnahmeeinheit 16a zu erhitzen. Das Versorgungsinduktionselement 14a ist als Induktionsheizelement ausgebildet. Das Versorgungsinduktionselement 14a ist in einer Einbaulage unterhalb der Aufstellplatte 24a angeordnet (vgl. Fig. 2).

In dem Betriebszustand stellt das Versorgungsinduktionselement 14a Energie induktiv bereit. Das Versorgungsinduktionselement 14a stellt in dem Betriebszustand induktiv Energie zu einer Beheizung zumindest eines Teils der Aufnahmeeinheit 16a bereit. Die Aufnahmeeinheit 16a weist zumindest ein Aufnahmeinduktionselement 18a auf. Das Aufnahmeinduktionselement 18a der Aufnahmeeinheit 16a ist als eine Sekundärspule ausgebildet und empfängt in dem Betriebszustand einen Teil der von dem Versorgungsinduktionselement 14a bereitgestellten Energie. Die Aufnahmeeinheit 16a umfasst zumindest ein elektrisches Heizelement (nicht dargestellt), welches mit einem Teil der durch das Aufnahmeinduktionselement 18a empfangenen Energie betrieben und zu einer Erhitzung zumindest eines in dem Aufnahmeraum 42a befindlichen Garguts vorgesehen ist. Mit einem weiteren Teil der von dem Versorgungsinduktionselement 14a empfangenen Energie versorgt das Aufnahmeinduktionselement 18a zumindest eine weitere Einheit, insbesondere eine Sensoreinheit 20a. In dem vorliegenden Ausführungsbeispiel ist das Aufnahmeinduktionselement 18a zusätzlich als ein Empfangsinduktionselement 50a ausgebildet und empfängt in wenigstens einem Betriebszustand, neben dem Teil der von dem Versorgungsinduktionsinduktionselement 14a bereitgestellten Energie, zumindest auch eine Information, welche insbesondere in einem zweiten Signal 36a und/oder in einem dritten Signal 92a kodiert ist.

Das Induktionsenergieübertragungssystem 10a weist die Sensoreinheit 20a auf. Die Sensoreinheit 20a dient einer Detektion von zumindest einer Messgröße 22a. Die Sensoreinheit 20a weist zumindest ein erstes Sensorelement 52a auf. Das erste Sensorelement 52a ist als ein Temperatursensor 56a ausgebildet und ist Teil der Aufnahmeeinheit 16a (vgl. Figur 3). Der Temperatursensor 56a misst eine Temperatur innerhalb des Aufnahmeraums 42a, beispielsweise um eine optimale Heizleistung zum Garen eines in dem Aufnahmeraum 42a befindlichen Garguts einstellen zu können. In dem vorliegenden Ausführungsbeispiel weist die Sensoreinheit 20a zumindest ein zweites Sensorelement 54a auf. Das zweite Sensorelement 54a ist Teil der Versorgungseinheit 12a und in der Aufstellplatte 24a integriert. Das zweite Sensorelement 54a ist als ein weiterer Temperatursensor ausgebildet. Das zweite Sensorelement 54a misst eine Temperatur einer einem Bediener zugewandten Oberfläche der Aufstellplatte 24a, beispielsweise um den Nutzer vor einer möglichen Verbrennungsgefahr aufgrund einer hohen Temperatur der Aufstellplatte 24a zu warnen.

Das Induktionsenergieübertragungssystem 10a weist zumindest einen ersten Informationskanal 30a auf. Der erste Informationskanal 30a dient einer Übertragung eines ersten Signals 32a zwischen der Aufnahmeeinheit 16a und der Versorgungseinheit 12a. Das erste Signal 32a kodiert die Messgröße 22a. Das Induktionsenergieübertragungssystem 10a weist außerdem zumindest einen zweiten Informationskanal 34a auf, welcher von dem ersten Informationskanal 30a verschieden ist und welcher zu einer Übertragung eines zweiten Signals 36a zwischen der Aufnahmeeinheit 16a und der Versorgungseinheit 12a vorgesehen ist. Das zweite Signal 36a kodiert dabei ebenfalls die Messgröße 22a.

Das Induktionsenergieübertragungssystem 10a weist zumindest einen Funksender 46a und zumindest einen Funkempfänger 48a auf, welche dem ersten Informationskanal 30a zugeordnet sind. Der Funksender 46a übertragt das als ein Funksignal ausgebildete erste Signal 32a an den Funkempfänger 48a. Eine Übertragung des ersten Signals 32a zwischen dem Funksender 46a und dem Funkempfänger 48a erfolgt nach dem Bluetooth-Standard.

Der zweite Informationskanal 34a umfasst das Versorgungsinduktionselement 14a und zumindest das als Empfangsinduktionselement 50a ausgebildetes Aufnahmeinduktionselement 18a der Aufnahmeeinheit 16a. Das Versorgungsinduktionselement 14a überträgt das zweite Signal 36a an das Empfangsinduktionselement 50a der Aufnahmeeinheit 16a.

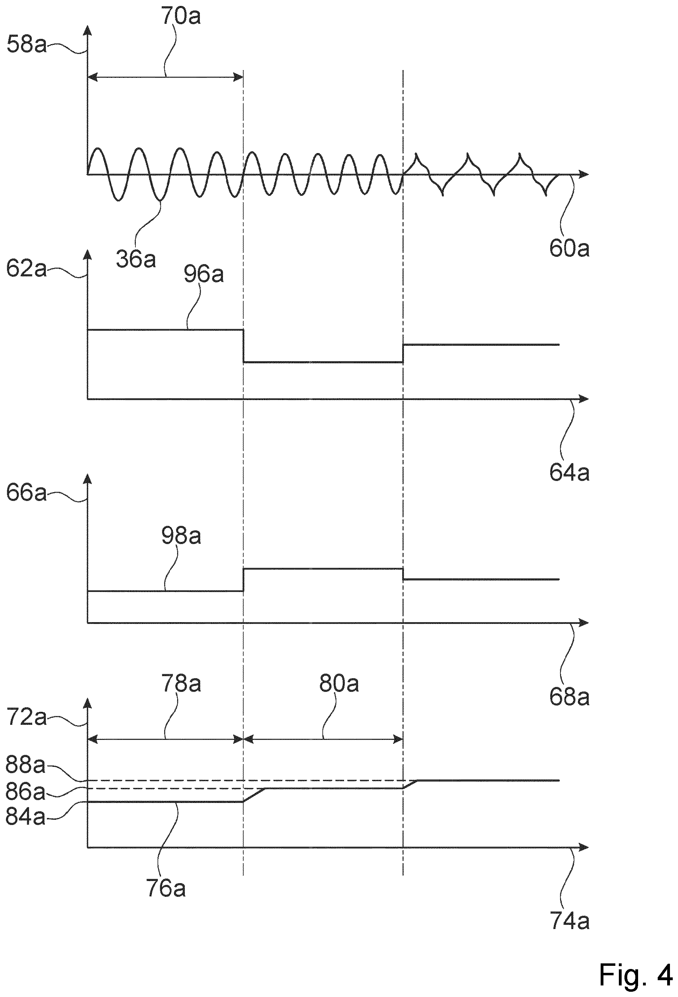

Im vorliegenden Ausführungsbeispiel ist das zweite Signal 36a eine Oberschwingung eines Energieübertragungssignals, welches von dem Versorgungsinduktionselement 14a in dem Betriebszustand an das als Empfangsinduktionselement 50a ausgebildete Aufnahmeinduktionselement 18a der Aufnahmeeinheit 16a übertragen wird. Das zweite Signal 36a ist im vorliegenden Ausführungsbeispiel frequenzmoduliert (vgl. Fig. 4). Zusätzlich ist das zweite Signal 36a im vorliegenden Ausführungsbeispiel amplitudenmoduliert. Alternativ oder zusätzlich könnte das zweite Signal 36a tastgradmoduliert sein.

Fig. 4 zeigt eine Zusammenschau von vier Diagrammen. Auf einer Ordinatenachse 58a eines ersten Diagramms ist das zweite Signal 36a aufgetragen. Auf einer Abszissenachse 60a des ersten Diagramms ist eine Zeit aufgetragen. Auf einer Ordinatenachse 62a eines zweiten Diagramms ist eine Amplitude 96a des zweiten Signals 36a aufgetragen. Auf einer Abszissenachse 64a des zweiten Diagramms ist eine Zeit aufgetragen. Auf einer Ordinatenachse 66a eines dritten Diagramms ist eine Frequenz 98a des zweiten Signals 36a aufgetragen. Auf einer Abszissenachse 68a des dritten Diagramms ist eine Zeit aufgetragen. Auf einer Ordinatenachse 72a eines vierten Diagramms ist die Messgröße 22a in Form einer Messgrößenkennlinie 76a aufgetragen. Auf einer Abszissenachse 74a des vierten Diagramms ist eine Zeit aufgetragen.

Das zweite Signal 36a weist eine bestimmte Dauer und/oder eine bestimmte Anzahl an Schwingungen auf. Insbesondere weist das zweite Signal 36a eine Mindestdauer 70a auf, welche das zweite Signal 36a insbesondere mindestens annehmen sollte. Beispielsweise könnte die Mindestdauer 70a aus einer Trägheit einer Übertragung von Energie und/oder vorteilhaft einer Übertragung des zweiten Signals 36a resultieren.

Während der Mindestdauer 70a bleiben die Amplitude 96a und die Frequenz 98a des zweiten Signals 36a jeweils konstant und kodieren einen ersten Messgrößenwert 84a der Messgröße 22a.

Aus Fig. 4 ist zu entnehmen, dass sich das zweite Signal 36a im vorliegenden Ausführungsbeispiel nach Überschreiten der Mindestdauer 70a mit einem weiteren Verlauf der auf der Abszissenachse 60a aufgetragenen Zeit verändert und dass sich die Messgrößenkennlinie 76a mit einem Verlauf der auf der Abszissenachse 74a aufgetragenen Zeit verändert. Während eines ersten Zeitraums, welcher vorliegend der Mindestdauer 70a entspricht, hat die Messgrößenkennlinie 76a einen konstanten Verlauf und repräsentiert den ersten Messgrößenwert 84a der Messgröße 22a, welcher auf der Ordinatenachse 72a aufgetragen ist. Nach Ablauf der Mindestdauer 70a hat sich das zweite Signal 36a auf Grund einer veränderten Modulation der Amplitude 96a und der Frequenz 98a verändert. Während eines zweiten Zeitraums, welcher zumindest der Mindestdauer 70a entspricht, bleiben die Amplitude 96a und die Frequenz 98a des zweiten Signals 36a wiederum konstant und kodieren einen zweiten Messgrößenwert 86a der Messgröße 22a. Während dieses zweiten Zeitraums bleibt auch der Verlauf der Messgrößenkennlinie 76a konstant und repräsentiert nun den zweiten Messgrößenwert 86a, welcher auf der Ordinatenachse 72a aufgetragen ist. Nach Ablauf des zweiten Zeitraums hat sich das zweite Signal 36a auf Grund einer erneut veränderten Modulation der Amplitude 96a und der Frequenz 98a erneut verändert. Während eines dritten Zeitraums, welcher zumindest der Mindestdauer 70a entspricht bleiben die Amplitude 96a und die Frequenz 98a des zweiten Signals 36a wiederum konstant und kodieren nun einen dritten Messgrößenwert 88a der Messgröße 22a, welcher auf der Ordinatenachse 72a aufgetragen ist.

Die in Fig. 4 dargestellte Messgrößenkennlinie 76a könnte beispielsweise eine Temperaturkennlinie eines durch den Temperatursensor 56a der Sensoreinheit 20 detektierten Temperaturverlaufs innerhalb der Aufnahmeeinheit 16a sein. In diesem Fall würde der erste Messgrößenwert 84a einer ersten, innerhalb eines ersten Zeitraums 78a durch den Temperatursensor 56a detektierten Temperatur innerhalb der Aufnahmeeinheit 16a entsprechen. Der zweite Messgrößenwert 86a würde in diesem Fall einer zweiten, durch den Temperatursensor 56a der Sensoreinheit 20 detektierten Temperatur innerhalb eines späteren zweiten Zeitraums 80a entsprechen.

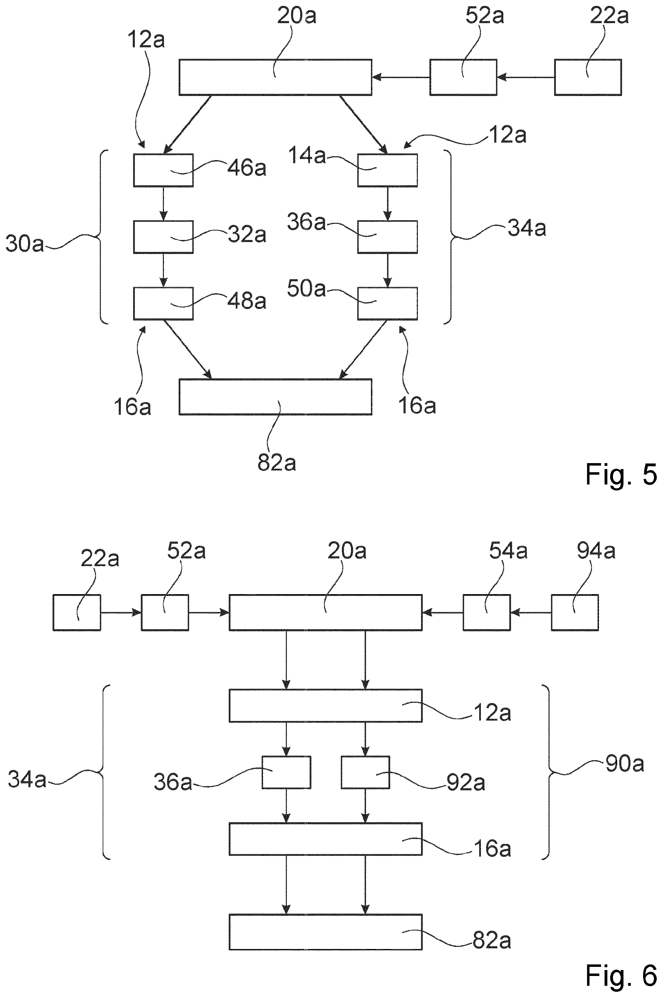

Fig. 5 zeigt in einem Blockschaltbild schematisch eine Übertragung des ersten Signals 32a und des zweiten Signals 36a. Durch das erste Sensorelement 52a wird zunächst zumindest die Messgröße 22a detektiert, in ein elektrisches Signal umgewandelt und von der Sensoreinheit 20a weiterverarbeitet. Die Sensoreinheit 20a übermittelt die Messgröße 22a an den Funksender 46a. Der Funksender 46a überträgt das erste Signal 32a, welches die Messgröße 22a kodiert, an den Funkempfänger 48a. Im vorliegenden Ausführungsbeispiel handelt es sich bei dem ersten Signal 32a um ein Funksignal und insbesondere um ein Bluetooth-Signal. Der Funkempfänger 48a wandelt das von dem Funksender 46a empfangene erste Signal 32a in ein elektrisches Signal und übermittelt es an eine Datenverarbeitungseinheit 82a. Der Funksender 46a, das erste Signal 32a und der Funkempfänger 48a bilden in dem vorliegenden Ausführungsbeispiel den ersten Informationskanal 30a. Die Sensoreinheit 20a übermittelt die Messgröße 22a außerdem an das Versorgungsinduktionselement 14a der Versorgungseinheit 12a. Das Versorgungsinduktionselement 14a überträgt das zweite Signal 36a, welches die Messgröße 22a kodiert, an das Empfangsinduktionselement 50a der Aufnahmeeinheit 16a. Im vorliegenden Ausführungsbeispiel handelt es sich bei dem zweiten Signal 36a um ein Induktionssignal. Das Empfangsinduktionselement 50a wandelt das zweite Signal 36a in ein elektrisches Signal und übermittelt es an die Datenverarbeitungseinheit 82a. Im vorliegenden Ausführungsbeispiel bilden das Versorgunginduktionselement 14a der Versorgungseinheit 12a, das Empfangsinduktionselement 50a der Aufnahmeeinheit 16a und das zweite Signal 36a den zweiten Informationskanal 34a. Die Datenverarbeitungseinheit 82a vergleicht eine mittels des ersten Informationskanals 30a übermittelte Information bezüglich der Messgröße 22a mit einer mittels des zweiten Informationskanals 34a übermittelten Information bezüglich der Messgröße 22a.

Fig. 6 zeigt in einem weiteren Blockschaltbild schematisch eine Variante des vorliegenden Ausführungsbeispiels zu einer Übertragung des zweiten Signals 36a und zu einer zusätzlichen Übertragung des dritten Signals 92a. Durch das erste Sensorelement 52a wird zunächst die erste Messgröße 22a detektiert, in ein elektrisches Signal umgewandelt und von der Sensoreinheit 20a weiterverarbeitet. Durch das zweite Sensorelement 54a wird eine weitere Messgröße 94a detektiert und von der Sensoreinheit 20a weiterverarbeitet. Die Sensoreinheit 20a übermittelt die Messgröße 22a und die weitere Messgröße 94 an die Versorgungseinheit 12a. Die Messgröße 22a wird durch das zweite Signal 36a kodiert und über den zweiten Informationskanal 34a an die Aufnahmeeinheit 16a übertragen. Die weitere Messgröße 94a wird durch das dritte Signal 92a kodiert und über einen dritten Informationskanal 90a an die Aufnahmeeinheit 16a übertragen. Die Aufnahmeeinheit 16a übermittelt die Messgröße 22a und die weitere Messgröße 94a an die Datenverarbeitungseinheit 82a.

Der dritte Informationskanal 90a umfasst zumindest einen Teil der Aufnahmeeinheit 16a, zumindest einen Teil der Versorgungseinheit 12a und das dritte Signal 92a. Im vorliegenden Ausführungsbeispiel sind das zweite Signal 36a und das dritte Signal 92a jeweils auf das Energieübertragungssignal, welches das Versorgungsinduktionselement 14a in dem Betriebszustand an das als Empfangsinduktionselement 50a ausgebildete Aufnahmeinduktionselement 18a der Aufnahmeeinheit 16a überträgt, aufmoduliert. Das dritte Signal 92a ist dabei eine weitere Oberschwingung des Energieübertragungssignals in einem von dem zweiten Signal 36a verschiedenen Frequenzbereich. Im vorliegenden Ausführungsbeispiel ist das dritte Signal 92a frequenzmoduliert und amplitudenmoduliert. Die in Fig. 4 für das zweite Signal 36a schematisch dargestellte Modulation der Frequenz 98a und der Amplitude 96a kann sinngemäß auch für das dritte Signal 92a gelten. Alternativ oder zusätzlich könnte das dritte Signal 92a tastgradmoduliert sein. In einem Verfahren zu einem Betrieb des Induktionsenergieübertragungssystems 10a wird mittels des Versorgungsinduktionselements 14a in dem Betriebszustand induktiv Energie bereitgestellt. Ein Teil der von dem Versorgungsinduktionselement 14a bereitgestellten Energie wird in dem Betriebszustand von der Aufnahmeeinheit 16a empfangen. Mittels des Sensorelements 52a der Sensoreinheit 20a wird zumindest die Messgröße 22a detektiert, in dem ersten Signal 32a kodiert und durch den ersten Informationskanal 30a zwischen der Versorgungseinheit 12a und der Aufnahmeeinheit 16a übertragen. Die zumindest eine Messgröße 22a wird in dem zweiten Signal 36a kodiert und über den zweiten Informationskanal 34a zwischen der Versorgungseinheit 12a und der Aufnahmeeinheit 16a übertragen (vgl. Fig. 5).

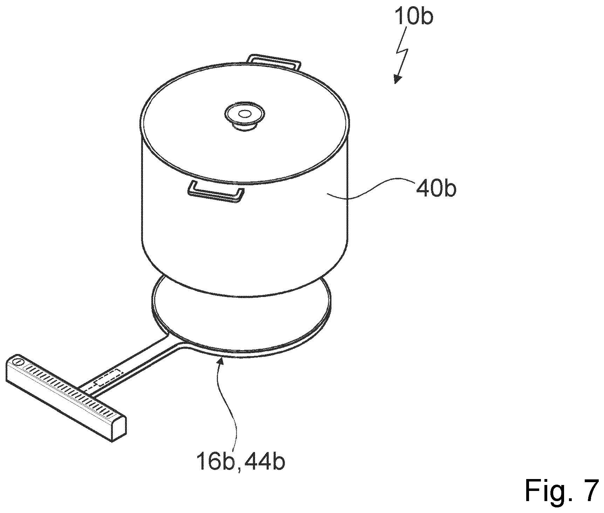

In Fig. 7 ist ein weiteres Ausführungsbeispiel der Erfindung gezeigt. Die nachfolgende Beschreibung beschränkt sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 bis 6 verwiesen werden kann. Zur Unterscheidung der Ausführungsbeispiele ist der Buchstabe a in den Bezugszeichen des Ausführungsbeispiels in den Figuren 1 bis 6 durch den Buchstaben b in den Bezugszeichen des Ausführungsbeispiels der Figur 7 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 6 verwiesen werden.

Fig. 7 zeigt eine Aufnahmeeinheit 16b eines alternativen Induktionsenergieübertragungssystems 10b. Die Aufnahmeeinheit 16b ist als eine Unterlegeinheit 44b zur Aufstellung eines Gargeschirrs 40b ausgebildet. Die Aufnahmeeinheit 16b weist bis auf eine induktive Beheizung die Funktionalität der Aufnahmeeinheit 16a des vorherigen Ausführungsbeispiels auf. Die induktive Beheizung erfolgt vorliegend unmittelbar in einem Gargeschirrboden des Gargeschirrs 40b.

## Patentansprüche

1. Induktionsenergieübertragungssystem (10a-b), insbesondere Induktionsgarsystem, mit zumindest einer Versorgungseinheit (12a), welche zumindest ein Versorgungsinduktionselement (14a) aufweist, das in wenigstens einem Betriebszustand induktiv Energie bereitstellt, mit zumindest einer Aufnahmeeinheit (16a-b), welche in dem Betriebszustand wenigstens einen Teil der von dem Versorgungsinduktionselement (14a) bereitgestellten Energie empfängt, mit zumindest einer Sensoreinheit (20a) zur Detektion zumindest einer Messgröße (22a) und mit einem ersten Informationskanal (30a) zur Übertragung zumindest eines ersten Signals (32a) zwischen der Aufnahmeeinheit (16a-b) und der Versorgungseinheit (12a), welches die Messgröße (22a) kodiert, **gekennzeichnet durch** zumindest einen von dem ersten Informationskanal (30a) verschiedenen zweiten Informationskanal (34a) zur Übertragung zumindest eines zweiten Signals (36a) zwischen der Aufnahmeeinheit (16a-b) und der Versorgungseinheit (12a), welches die Messgröße (22a) kodiert.

2. Induktionsenergieübertragungssystem (10a-b) nach Anspruch 1, **dadurch gekennzeichnet, dass** die Versorgungseinheit (12a) als ein Gargerät (38a) ausgebildet ist.

3. Induktionsenergieübertragungssystem (10a) nach Anspruch 1 oder 2, **dadurch gekennzeichnet, dass** die Aufnahmeeinheit (16a) als ein Gargeschirr (40a) ausgebildet ist.

4. Induktionsenergieübertragungssystem (10b) nach Anspruch 1 oder 2, **dadurch gekennzeichnet, dass** die Aufnahmeeinheit (16b) als eine Unterlegeinheit (44b) zur Aufstellung eines Gargeschirrs (40b) ausgebildet ist.

5. Induktionsenergieübertragungssystem (10a-b) nach einem der vorhergehenden Ansprüche, **dadurch gekennzeichnet, dass** der erste Informationskanal (30a) zumindest einen Funksender (46a) und zumindest einen Funkempfänger (48a) aufweist.

6. Induktionsenergieübertragungssystem (10a-b) nach Anspruch 5, **dadurch gekennzeichnet, dass** eine Übertragung des ersten Signals (32a) zwischen dem Funksender (46a) und dem Funkempfänger (48a) nach dem Bluetooth-Standard erfolgt.

7. Induktionsenergieübertragungssystem (10a-b) nach einem der vorhergehenden Ansprüche, **dadurch gekennzeichnet, dass** der zweite Informationskanal (34a) das Versorgungsinduktionselement (14a) und zumindest ein Empfangsinduktionselement (50a) der Aufnahmeeinheit (16a-b) umfasst.

8. Induktionsenergieübertragungssystem (10a-b) nach Anspruch 7, **dadurch gekennzeichnet, dass** das zweite Signal (36a) frequenzmoduliert und/oder amplitudenmoduliert und/oder tastgradmoduliert ist.

9. Induktionsenergieübertragungssystem (10a-b) nach einem der vorhergehenden Ansprüche, **dadurch gekennzeichnet, dass** die Sensoreinheit (20a) zumindest ein Sensorelement (52a) aufweist welches in der Versorgungseinheit (12a) integriert ist.

10. Induktionsenergieübertragungssystem (10a-b) einem der vorhergehenden Ansprüche, **dadurch gekennzeichnet, dass** die Sensoreinheit (20a) zumindest ein Sensorelement (52a) aufweist, welches in der Aufnahmeeinheit (16a) integriert ist.

11. Induktionsenergieübertragungssystem (10a-b) nach einem der vorhergehenden Ansprüche, **dadurch gekennzeichnet, dass** die Sensoreinheit (20a) zumindest einen Temperatursensor (56a) aufweist.

12. Induktionsenergieübertragungssystem (10a-b) nach einem der vorhergehenden Ansprüche, **gekennzeichnet durch** zumindest einen dritten Informationskanal (90a) zur Übertragung zumindest eines dritten Signals (92a) zwischen der Aufnahmeeinheit (16a) und der Versorgungseinheit (12a), welches eine weitere Messgröße (94a) kodiert.

13. Versorgungseinheit (12a), insbesondere Gargerät (38a), eines Induktionsenergieübertragungssystems (10a-b), mit zumindest einem Versorgungsinduktionselement (14a), das in wenigstens einem Betriebszustand induktiv Energie bereitstellt, mit zumindest einem Funkempfänger (48a), welcher einem ersten Informationskanal (30a) des Induktionsenergieübertragungssystems (10a-b) zugeordnet ist, wobei der erste Informationskanal (30a) zur Übertragung zumindest eines ersten Signals (32a), welches eine Messgröße (22a) kodiert, zwischen einer Aufnahmeeinheit (16a-b) des Induktionsenergieübertragungssystems (10a-b) und der Versorgungseinheit (12a) vorgesehen ist, wobei der Funkempfänger (48a) dazu vorgesehen ist, das von einem Funksender (46a) der Aufnahmeeinheit (16a-b) übertragene erste Signal (32a) zu empfangen, wobei das Versorgungsinduktionselement (14a) Teil zumindest eines zweiten Informationskanals (34a) des Induktionsenergieübertragungssystems (10a-b) ist, wobei der zweite Informationskanal (34a) verschieden zu dem ersten Informationskanal (30a) ist, wobei der zweite Informationskanal (34a) zur Übertragung zumindest eines zweiten Signals (36a), welches die Messgröße (22a) kodiert, zwischen der Aufnahmeeinheit (16a-b) und der Versorgungseinheit (12a) vorgesehen ist, und wobei das Versorgungsinduktionselement (14a) dazu vorgesehen ist, das zweite Signal (36a) an ein Empfangsinduktionselement (50a) der Aufnahmeeinheit (16a-b) zu übertragen.

14. Aufnahmeeinheit (16a-b), insbesondere Gargeschirr (40a), eines Induktionsenergieübertragungssystems (10a-b) , wobei die Aufnahmeeinheit (16a-b) dazu vorgesehen ist, in einem Betriebszustand wenigstens einen Teil einer von einem Versorgungsinduktionselement (14a) einer Versorgungseinheit (12a) des Induktionsenergieübertragungssystems (10a-b) bereitgestellten Energie zu empfangen, wobei die Aufnahmeeinheit (16a-b) zumindest ein Aufnahmeinduktionselement (18a) zu einer Aufnahme von induktiver Energie aufweist, wobei die Aufnahmeeinheit (16a-b) zumindest ein Sensorelement (52a) aufweist, welches zur Detektion von zumindest einer Messgröße (22a) vorgesehen ist, wobei die Aufnahmeeinheit (16a-b) zumindest einen Funksender (46a) aufweist, welcher einem ersten Informationskanal (30a) des Induktionsenergieübertragungssystems (10a-b) zugeordnet ist, wobei der erste Informationskanal (30a) zur Übertragung zumindest eines ersten Signals (32a), welches die Messgröße (22a) kodiert, zwischen der Aufnahmeeinheit (16a-b) und einer Versorgungseinheit (12a) des Induktionsenergieübertragungssystems (10a-b) vorgesehen ist, wobei der Funksender (46a) dazu vorgesehen ist, das erste Signal (32a) an einen Funkempfänger (48a) der Versorgungseinheit (12a) zu übertragen, wobei das Aufnahmeinduktionselement (18a) zusätzlich als ein Empfangsinduktionselement (50a) ausgebildet ist, wobei das Empfangsinduktionselement (50a) Teil zumindest eines zweiten Informationskanals (34a) des Induktionsenergieübertragungssystems (10a-b) ist, wobei der zweite Informationskanal (34a) verschieden zu dem ersten Informationskanal (30a) ist, wobei der zweite Informationskanal (34a) zur Übertragung zumindest eines zweiten Signals (36a), welches die Messgröße (22a) kodiert, zwischen der Aufnahmeeinheit (16a-b) und der Versorgungseinheit (12a) vorgesehen ist, und wobei das Empfangsinduktionselement (50a) dazu vorgesehen ist, das zweite Signal (36a) von dem Versorgungsinduktionselement (14a) der Versorgungseinheit (12a) zu empfangen.

15. Verfahren zum Betrieb eines Induktionsenergieübertragungssystems (10a-b), insbesondere eines Induktionsgarsystems, insbesondere nach einem der Ansprüche 1 bis 12, mit zumindest einer Versorgungseinheit (12a), welche zumindest ein Versorgungsinduktionselement (14a) aufweist, mit zumindest einer Aufnahmeeinheit (16a-b), wobei in wenigstens einem Betriebszustand durch das Versorgungsinduktionselement (14a) induktiv Energie bereitgestellt wird, welche zumindest zu einem Teil von der Aufnahmeeinheit (16a-b) empfangen wird, und mit zumindest einer Sensoreinheit (20a), welche zumindest eine Messgröße (22a) detektiert, wobei die zumindest eine Messgröße (22a) in einem ersten Signal (32a) kodiert und durch einen ersten Informationskanal (30a) zwischen der Versorgungseinheit (12a) und der Aufnahmeeinheit (16a-b) übertragen wird, **dadurch gekennzeichnet, dass** die zumindest eine Messgröße (22a) in einem zweiten Signal (36a) kodiert und durch zumindest einen von dem ersten Informationskanal (30a) verschiedenen zweiten Informationskanal (34a) zwischen der Versorgungseinheit (12a) und der Aufnahmeeinheit (16a-b) übertragen wird.

## Claims

1. Induction energy transmission system (10a-b), in particular induction cooking system, having at least one supply unit (12a) which has at least one supply induction element (14a) which inductively provides energy in at least one operating state, having at least one receiving unit (16a-b) which receives at least part of the energy provided by the supply induction element (14a) in the operating state, having at least one sensor unit (20a) for detecting at least one measurement variable (22a), and having a first information channel (30a) for transmitting at least one first signal (32a) between the receiving unit (16a-b) and the supply unit (12a), which first signal (32a) codes the measurement variable (22a), **characterised by** at least one second information channel (34a), which differs from the first information channel (30a), for transmitting at least one second signal (36a) between the receiving unit (16a-b) and the supply unit (12a), which second signal (36a) codes the measurement variable (22a).

2. Induction energy transmission system (10a-b) according to claim 1, **characterised in that** the supply unit (12a) is configured as a cooking appliance (38a).

3. Induction energy transmission system (10a) according to claim 1 or 2, **characterised in that** the receiving unit (16a) is configured as an item of cookware (40a).

4. Induction energy transmission system (10b) according to claim 1 or 2, **characterised in that** the receiving unit (16b) is configured as a support unit (44b) for positioning an item of cookware (40b).

5. Induction energy transmission system (10a-b) according to one of the preceding claims, **characterised in that** the first information channel (30a) has at least one radio transmitter (46a) and at least one radio receiver (48a).

6. Induction energy transmission system (10a-b) according to claim 5, **characterised in that** a transmission of the first signal (32a) takes place between the radio transmitter (46a) and the radio receiver (48a) according to the Bluetooth standard.

7. Induction energy transmission system (10a-b) according to one of the preceding claims, **characterised in that** the second information channel (34a) comprises the supply induction element (14a) and at least one reception induction element (50a) of the receiving unit (16a-b).

8. Induction energy transmission system (10a-b) according to claim 7, **characterised in that** the second signal (36a) is frequency modulated and/or amplitude modulated and/or duty cycle modulated.

9. Induction energy transmission system (10a-b) according to one of the preceding claims, **characterised in that** the sensor unit (20a) has at least one sensor element (52a) which is integrated in the supply unit (12a).

10. Induction energy transmission system (10a-b) according to one of the preceding claims, **characterised in that** the sensor unit (20a) has at least one sensor element (52a) which is integrated in the receiving unit (16a).

11. Induction energy transmission system (10a-b) according to one of the preceding claims, **characterised in that** the sensor unit (20a) has at least one temperature sensor (56a).

12. Induction energy transmission system (10a-b) according to one of the preceding claims, **characterised by** at least one third information channel (90a) for transmitting at least one third signal (92a) between the receiving unit (16a) and the supply unit (12a), which third signal (92a) codes a further measurement variable (94a).

13. Supply unit (12a), in particular cooking appliance (38a), of an induction energy transmission system (10a-b), having at least one supply induction element (14a), which inductively supplies energy in at least one operating state, having at least one radio receiver (48a), which is assigned to a first information channel (30a) of the induction energy transmission system (10a-b), wherein the first information channel (30a) is provided to transmit at least one first signal (32a), which codes a measurement variable (22a), between a receiving unit (16a-b) of the induction energy transmission system (10a-b) and the supply unit (12a), wherein the radio receiver (48a) is provided to receive the first signal (32a) transmitted by a radio transmitter (46a) of the receiving unit (16a-b), wherein the supply induction element (14a) is part of at least a second information channel (34a) of the induction energy transmission system (10a-b), wherein the second information channel (34a) differs from the first information channel (30a), wherein the second information channel (34a) is provided to transmit at least one second signal (36a), which codes the measurement variable (22a), between the receiving unit (16a-b) and the supply unit (12a), and wherein the supply induction element (14a) is provided to transmit the second signal (36a) to a receiving induction element (50a) of the receiving unit (16a-b).

14. Receiving unit (16a-b), in particular item of cookware (40a), of an induction energy transmission system (10a-b), wherein the receiving unit (16a-b) is provided, in an operating state, to receive at least part of the energy provided by a supply induction element (14a) of a supply unit (12a) of the induction energy transmission system (10a-b), wherein the receiving unit (16a-b) has at least one receiving induction element (18a) for receiving inductive energy, wherein the receiving unit (16a-b) has at least one sensor element (52a) which is provided to detect at least one measurement variable (22a), wherein the receiving unit (16a-b) has at least one radio transmitter (46a), which is assigned to a first information channel (30a) of the induction energy transmission system (10a-b), wherein the first information channel (30a) is provided to transmit at least a first signal (32a), which codes the measurement variable (22a), between the receiving unit (16a-b) and a supply unit (12a) of the induction energy transmission system (10a-b), wherein the radio transmitter (46a) is provided to transmit the first signal (32a) to a radio receiver (48a) of the supply unit (12a), wherein the receiving induction element (18a) is additionally embodied as a receiving induction element (50a), wherein the receiving induction element (50a) is part of at least one second information channel (34a) of the induction energy transmission system (10a-b), wherein the second information channel (34a) differs from the first information channel (30a), wherein the second information channel (34a) is provided to transmit at least one second signal (36a), which codes the measurement variable (22a), between the receiving unit (16a-b) and the supply unit (12a), and wherein the receiving induction element (50a) is provided to receive the second signal (36a) from the supply induction element (14a) of the supply unit (12a).

15. Method for operating an induction energy transmission system (10a-b), in particular an induction cooking system, in particular according to one of claims 1 to 12, having at least a supply unit (12a), which has at least one supply induction element (14a), with at least one receiving unit (16a-b), wherein in at least one operating state inductive energy is provided by the supply induction element (14a), which is received at least in part by the receiving unit (16a-b) and with at least one sensor unit (20a), which detects at least one measurement variable (22a), wherein the at least one measurement variable (22a) codes in a first signal (32a) and is transmitted through a first information channel (30a) between the supply unit (12a) and the receiving unit (16a-b), **characterised in that** the at least one measurement variable (22a) codes in a second signal (36a) and is transmitted through at least one second information channel (34a) which differs from the first information channel (30a) between the supply unit (12a) and the receiving unit (16a-b).

## Revendications

1. Système de transmission d'énergie par induction (10a-b), en particulier système de cuisson par induction, avec au moins une unité d'alimentation (12a), laquelle comprend au moins un élément d'induction d'alimentation (14a) qui, dans au moins un état de fonctionnement, fournit de l'énergie par induction, avec au moins une unité de réception (16a-b), laquelle, dans l'état de fonctionnement, reçoit au moins une partie de l'énergie fournie par l'élément d'induction d'alimentation (14a), avec au moins une unité capteur (20a) pour la détection d'au moins une grandeur de mesure (22a) et avec un premier canal d'information (30a) pour la transmission d'au moins un premier signal (32a) entre l'unité de réception (16a-b) et l'unité d'alimentation (12a), lequel code la grandeur de mesure (22a), **caractérisé par** au moins un deuxième canal d'information (34a) différent du premier canal d'information (30a) pour la transmission d'au moins un deuxième signal (36a) entre l'unité de réception (16a-b) et l'unité d'alimentation (12a), lequel code la grandeur de mesure (22a).

2. Système de transmission d'énergie par induction (10a-b) selon la revendication 1, **caractérisé en ce que** l'unité d'alimentation (12a) est conçue sous la forme d'un appareil de cuisson (38a).

3. Système de transmission d'énergie par induction (10a) selon la revendication 1 ou la revendication 2, **caractérisé en ce que** l'unité de réception (16a) est conçue sous la forme d'un ustensile de cuisson (40a).

4. Système de transmission d'énergie par induction (10b) selon la revendication 1 ou la revendication 2, **caractérisé en ce que** l'unité de réception (16b) est conçue sous la forme d'une unité de calage (44b) pour la mise en place d'un ustensile de cuisson (40b).

5. Système de transmission d'énergie par induction (10a-b) selon l'une des revendications précédentes, **caractérisé en ce que** le premier canal d'information (30a) comprend au moins un émetteur radio (46a) et au moins un récepteur radio (48a).

6. Système de transmission d'énergie par induction (10a-b) selon la revendication 5, **caractérisé en ce qu'**une transmission du premier signal (32a) entre l'émetteur radio (46a) et le récepteur radio (48a) s'effectue selon la norme Bluetooth.

7. Système de transmission d'énergie par induction (10a-b) selon l'une des revendications précédentes, **caractérisé en ce que** le deuxième canal d'information (34a) comporte l'élément d'induction d'alimentation (14a) et au moins un élément d'induction de réception (50a) de l'unité de réception (16a-b).

8. Système de transmission d'énergie par induction (10a-b) selon la revendication 7, **caractérisé en ce que** le deuxième signal (36a) est modulé en fréquence et/ou modulé en amplitude et/ou modulé en rapport cyclique.

9. Système de transmission d'énergie par induction (10a-b) selon l'une des revendications précédentes, **caractérisé en ce que** l'unité capteur (20a) comprend au moins un élément capteur (52a), lequel est intégré dans l'unité d'alimentation (12a).

10. Système de transmission d'énergie par induction (10a-b) selon l'une des revendications précédentes, **caractérisé en ce que** l'unité capteur (20a) comprend au moins un élément capteur (52a), lequel est intégré dans l'unité de réception (16a).

11. Système de transmission d'énergie par induction (10a-b) selon l'une des revendications précédentes, **caractérisé en ce que** l'unité capteur (20a) comprend au moins un capteur de température (56a).

12. Système de transmission d'énergie par induction (10a-b) selon l'une des revendications précédentes, **caractérisé par** au moins un troisième canal d'information (90a) pour la transmission d'au moins un troisième signal (92a) entre l'unité de réception (16a) et l'unité d'alimentation (12a), lequel code une grandeur de mesure supplémentaire (94a).

13. Unité d'alimentation (12a), en particulier appareil de cuisson (38a), d'un système de transmission d'énergie par induction (10a-b), avec au moins un élément d'induction d'alimentation (14a) qui, dans au moins un état de fonctionnement, fournit de l'énergie par induction, avec au moins un récepteur radio (48a), lequel est associé à un premier canal d'information (30a) du système de transmission d'énergie par induction (10a-b), dans laquelle le premier canal d'information (30a) pour la transmission d'au moins un premier signal (32a), lequel code une grandeur de mesure (22a), est prévu entre une unité de réception (16a-b) du système de transmission d'énergie par induction (10a-b) et l'unité d'alimentation (12a), dans laquelle le récepteur radio (48a) est prévu pour recevoir le premier signal (32a) transmis par un émetteur radio (46a) de l'unité de réception (16a-b), dans laquelle l'élément d'induction d'alimentation (14a) fait partie d'au moins un deuxième canal d'information (34a) du système de transmission d'énergie par induction (10a-b), dans laquelle le deuxième canal d'information (34a) est différent du premier canal d'information (30a), dans laquelle le deuxième canal d'information (34a) pour la transmission d'au moins un deuxième signal (36a), lequel code la grandeur de mesure (22a), est prévu entre l'unité de réception (16a-b) et l'unité d'alimentation (12a), et dans laquelle l'élément d'induction d'alimentation (14a) est prévu pour transmettre le deuxième signal (36a) à un élément d'induction de réception (50a) de l'unité de réception (16a-b).

14. Unité de réception (16a-b), en particulier ustensile de cuisson (40a), d'un système de transmission d'énergie par induction (10a-b), l'unité de réception (16a-b) étant prévue, dans un état de fonctionnement, pour recevoir au moins une partie d'une énergie fournie par un élément d'induction d'alimentation (14a) d'une unité d'alimentation (12a) du système de transmission d'énergie par induction (10a-b), l'unité de réception (16a-b) comprenant au moins un élément d'induction de réception (18a) pour une réception d'énergie inductive, l'unité de réception (16a-b) comprenant au moins un élément capteur (52a), lequel est prévu pour la détection d'au moins une grandeur de mesure (22a), l'unité de réception (16a-b) comprenant au moins un émetteur radio (46a), lequel est associé à un premier canal d'information (30a) du système de transmission d'énergie par induction (10a-b), dans laquelle le premier canal d'information (30a) pour la transmission d'au moins un premier signal (32a), lequel code la grandeur de mesure (22a), est prévu entre l'unité de réception (16a-b) et une unité d'alimentation (12a) du système de transmission d'énergie par induction (10a-b), dans laquelle l'émetteur radio (46a) est prévu pour transmettre le premier signal (32a) à un récepteur radio (48a) de l'unité d'alimentation (12a), dans laquelle l'élément d'induction de réception (18a) est en outre conçu sous la forme d'un élément d'induction de réception (50a), dans laquelle l'élément d'induction de réception (50a) fait partie d'au moins un deuxième canal d'information (34a) du système de transmission d'énergie par induction (10a-b), dans laquelle le deuxième canal d'information (34a) est différent du premier canal d'information (30a), dans laquelle le deuxième canal d'information (34a) pour la transmission d'au moins un deuxième signal (36a), lequel code la grandeur de mesure (22a), est prévu entre l'unité de réception (16a-b) et l'unité d'alimentation (12a), et dans laquelle l'élément d'induction de réception (50a) est prévu pour recevoir le deuxième signal (36a) en provenance de l'élément d'induction d'alimentation (14a) de l'unité d'alimentation (12a).

15. Procédé pour le fonctionnement d'un système de transmission d'énergie par induction (10a-b), en particulier d'un système de cuisson par induction, en particulier selon l'une des revendications 1 à 12, avec au moins une unité d'alimentation (12a), laquelle comprend au moins un élément d'induction d'alimentation (14a), avec au moins une unité de réception (16a-b), dans lequel, dans au moins un état de fonctionnement, de l'énergie est fournie par induction par le biais de l'élément d'induction d'alimentation (14a), laquelle est reçue au moins en partie par l'unité de réception (16a-b), et avec au moins une unité capteur (20a), laquelle détecte au moins une grandeur de mesure (22a), dans lequel l'au moins une grandeur de mesure (22a) est codée en un premier signal (32a) et transmise par le biais d'un premier canal d'information (30a) entre l'unité d'alimentation (12a) et l'unité de réception (16a-b), **caractérisé en ce que** l'au moins une grandeur de mesure (22a) est codée en un deuxième signal (36a) et transmise par le biais d'au moins un deuxième canal d'information (34a) différent du premier canal d'information (30a) entre l'unité d'alimentation (12a) et l'unité de réception (16a-b).
